# EUROPÄISCHE PATENTSCHRIFT

(11) **EP 3 947 934 B1**
(45) Veröffentlichungstag und Bekanntmachung des Hinweises auf die Patenterteilung: **06.03.2024**
(21) Anmeldenummer: 19718055.7
(22) Anmeldetag: 03.04.2019
(51) Int. Cl.: F02B 29/04, F28F 99/00

(54) **TEMPERIERVORRICHTUNG UND BRENNKRAFTMASCHINE MIT EINER SOLCHEN**
TEMPERATURE CONTROL DEVICE AND INTERNAL COMBUSTION ENGINE HAVING SAME
DISPOSITIF DE RÉGULATION THERMIQUE ET MOTEUR À COMBUSTION INTERNE COMPRENANT CELUI-CI

(43) Veröffentlichungstag der Anmeldung: 09.02.2022
(73) Patentinhaber: Innio Jenbacher GmbH & Co OG, 6200 Jenbach (AT)
(72) Erfinder: SCHLAG, Josef, 6020 Innsbruck (AT); ABART, Guenther, 6306 Söll (AT)
(74) Vertreter: Torggler & Hofmann Patentanwälte - Innsbruck
(86) Internationale Anmeldenummer: PCT/AT2019/060112
(87) Internationale Veröffentlichungsnummer: WO 2020/198766

(56) Entgegenhaltungen:
- JP-A- 2013 079 589
- US-A1- 2006 272 621
- US-A1- 2016 273 854
- US-A1- 2018 149 433

## Beschreibung

Die Erfindung betrifft eine Temperiervorrichtung mit den Merkmalen des Oberbegriffs des Anspruchs 1 und eine Brennkraftmaschine mit wenigstens einer solchen Temperiervorrichtung.

Gattungsgemäße Temperiervorrichtungen werden zumeist zum Kühlen von Ladeluft oder - im Falle gemischaufgeladener Brennkraftmaschinen - zum Kühlen eines Brennstoff-Luft-Gemisches eingesetzt. Es kann jedoch in Abhängigkeit von den Umgebungsbedingungen der Brennkraftmaschine durchaus erforderlich sein, die Ladeluft oder das Brennstoff-Luft-Gemisch mittels der Temperiervorrichtung zu erwärmen.

Aus dem Stand der Technik bekannte Ausführungsformen gehen beispielweise aus der US 2016/0273854 A1, der JP 2013 079589 A oder der US 2018/169433 A1 hervor.

Es kann notwendig sein, dem Wärmetauscher der Temperiervorrichtung nur einen Teil des im Einlasstrakt der Brennkraftmaschine vorhandenen Temperiermediumflusses zuzuführen (beispielsweise, aber nicht nur, bei einer zweistufigen Ausbildung des Temperiermediums). In solchen Fällen muss im Stand der Technik die Temperiervorrichtung mittels eines außerhalb der Temperiervorrichtung angeordneten und von der Temperiervorrichtung gesonderten Bypasses umgangen werden, was mit einer Vergrößerung des erforderlichen Bauraumes verbunden ist.

Aufgabe der Erfindung ist die Bereitstellung einer gattungsgemäßen Temperiervorrichtung und einer Brennkraftmaschine mit einer solchen Temperiervorrichtung, bei welchen auf kompakte Art und Weise das Vorsehen eines Bypasses ermöglicht wird.

Diese Aufgabe wird durch eine Temperiervorrichtung mit den Merkmalen des Anspruchs 1 und eine Brennkraftmaschine mit einer solchen Temperiervorrichtung gelöst. Vorteilhafte Ausführungsformen der Erfindung sind in den abhängigen Ansprüchen definiert.

Eine erfindungsgemäße Temperiervorrichtung für Ladeluft oder ein Brennstoff-Luft-Gemisch einer Brennkraftmaschine, weist ein einen Innenraum umschließendes Gehäuse auf, welches zumindest einen Eingangsanschluss und zumindest einen Ausgangsanschluss für die zu temperierende Ladeluft oder das zu temperierende Gemisch und wenigstens einen Zufuhranschluss und wenigstens einen Abfuhranschluss für Temperiermedium aufweist, wobei im Innenraum des Gehäuses ein Wärmetauscher angeordnet oder ausgebildet ist, über welchen im Betrieb der Temperiervorrichtung ein Wärmetausch zwischen Temperiermedium und Ladeluft oder Gemisch stattfindet. Zwischen dem wenigstens einen Zufuhranschluss und dem wenigstens einen Abfuhranschluss für Temperiermedium ist (als baulicher Teil der Temperiervorrichtung) zumindest ein Bypass angeordnet, über welchen Temperiermedium vom wenigstens einen Zufuhranschluss zum wenigstens einen Abfuhranschluss strömen kann, ohne in den Wärmetauscher einzutreten.

Bei der Erfindung ist also vorgesehen, dass der zumindest eine Bypass ein Teil der Temperiervorrichtung selbst ist und in diese baulich integriert ist. Damit ergibt sich eine äußerst kompakte Bauweise ohne das Erfordernis einer von der Temperiervorrichtung gesonderten Verschlauchung oder Verrohrung für den zumindest einen Bypass. Vom Gesamtstrom an Temperiermedium, der in den wenigstens einen Zufuhranschluss eintreten kann, wird innerhalb des wenigstens einen Zufuhranschlusses über den zumindest einen Bypass ein Teilstrom abgezweigt (wobei ein anderer Teilstrom zum Wärmetauscher strömt), strömt zum wenigstens einen Abfuhranschluss und verlässt gemeinsam mit einem vom Wärmetauscher kommenden Teilstrom die Temperiervorrichtung über den wenigstens einen Abfuhranschluss.

Grundsätzlich könnte zwar vorgesehen sein, dass der zumindest eine Bypass innerhalb des Innenraumes des Gehäuses angeordnet ist, was im Vergleich zu einer von der Temperiervorrichtung gesonderten Verschlauchung oder Verrohrung für den zumindest einen Bypass immer noch eine kompaktere Bauweise darstellt. Ein noch kleiner dimensioniertes Gehäuse ist allerdings bei einem Ausführungsbeispiel der Erfindung möglich, wenn vorgesehen ist, dass der zumindest eine Bypass außerhalb des Innenraums des Gehäuses angeordnet ist.

Wie groß der Anteil des über den zumindest einen Bypass strömenden Teilstroms relativ zu dem Gesamtstrom oder relativ zum in Richtung des Wärmetauschers strömenden Teilstroms ist, kann - wenn alle anderen Gegebenheiten der Temperiervorrichtung unverändert bleiben - über den freien Strömungsquerschnitt des zumindest einen Bypasses gewählt werden.

Gemäß der Erfindung ist vorgesehen, dass im zumindest einen Bypass wenigstens eine Blende angeordnet ist. Der Anteil an über den zumindest einen Bypass strömenden Teilstrom kann in diesem Fall über den freien Strömungsquerschnitt der wenigstens einen Blende, welche den über den freien Strömungsquerschnitt des zumindest einen Bypasses darstellt, gewählt werden.

Die Blende ist erfindungsgemäßen in Form eines Lochbleches ausgebildet.

Es kann vorgesehen sein, dass die wenigstens eine Blende austauschbar im zumindest einen Bypass angeordnet ist. Dies eröffnet die Möglichkeit, für ein und dieselbe Temperiervorrichtung durch Wahl einer geeigneten Blende (wobei verschiedene Blenden einen verschiedenen freien Strömungsquerschnitt aufweisen können) einen gewünschten, über den zumindest einen Bypass strömenden Teilstrom zu wählen. Die Austauschbarkeit der wenigstens einen Blende kann beispielsweise so erfolgen, dass die wenigstens eine Blende in eine entsprechende Ausnehmung des zumindest einen Bypasses von außen einführbar ist.

Gemäß der Erfindung ist vorgesehen, dass der zumindest eine Bypass aus wenigstens zwei Teilstücken besteht, wobei eines der wenigstens zwei Teilstücke einstückig mit dem wenigstens einen Zufuhranschluss ausgebildet ist und/oder eines der wenigstens zwei Teilstücke einstückig mit dem wenigstens einen Abfuhranschluss ausgebildet ist. Dies ergibt eine besonders kompakte Bauform. Ist beispielsweise eine austauschbare Blende vorgesehen, kann diese erfindungsgemäß zwischen den wenigstens zwei Teilstücken des zumindest einen Bypass angeordnet (vorzugsweise eingeklemmt) werden. Zum Austausch der Blende können die wenigstens zwei Teilstücke vom Gehäuse gelöst werden, die Blende wird ausgetauscht und anschließend über die wenigstens zwei Teilstücke am Gehäuse befestigt.

Bei einem Ausführungsbeispiel der Erfindung ist vorgesehen, dass zumindest der wenigstens eine Zufuhranschluss und/oder der wenigstens eine Abfuhranschluss und/oder der zumindest eine Bypass gemeinsam an einem das Gehäuse mitbildenden Deckel angeordnet sind. Dies ermöglicht eine Ausbildung, bei welcher die restliche Temperiervorrichtung nach dem Stand der Technik ausgebildet werden kann.

Der wenigstens eine Zufuhranschluss und/oder der wenigstens eine Abfuhranschluss können bzw. kann einteilig oder mehrteilig ausgebildet sein. Im Falle einer mehrteiligen Ausbildung kann vorgesehen sein, dass der zumindest eine Bypass in Bezug auf den wenigstens einen Zufuhranschluss und/oder den wenigstens einen Abfuhranschluss vollständig an einem einzigen Teil angeordnet ist oder an zumindest zwei Teilen (z. B. Unterseite des zumindest einen Bypass an einem Teil und Oberseite des zumindest einen Bypass an anderem Teil) angeordnet ist.

Bei einem Ausführungsbeispiel der Erfindung ist vorgesehen, dass zumindest ein Teil des wenigstens einen Zufuhranschlusses und/oder ein Teil des wenigstens einen Abfuhranschlusses einstückig mit dem Deckel ausgebildet sind bzw. ist, wobei bevorzugt vorgesehen ist, dass der Deckel als Gussteil (aus Metall oder Kunststoff) ausgebildet ist. Dies stellt eine einfache Herstellungsmöglichkeit dar.

Es kann vorgesehen sein, dass die Temperiervorrichtung nur einstufig ausgebildet ist. Bei einem Ausführungsbeispiel der Erfindung ist allerdings vorgesehen, dass die Temperiervorrichtung zweistufig ausgebildet ist und einen ersten und einen zweiten Temperierzweig aufweist. In diesem Fall kann es genügen, wenn der zumindest eine Bypass gemäß der Erfindung nur bei einem der Temperierzweige vorgesehen ist. Sind der erste und der zweite Temperierzweig strömungstechnisch in Bezug auf das Temperiermedium seriell geschaltet, kann der zumindest eine Bypass in Bezug auf die Strömungsrichtung des Temperiermediums bei dem vorgeschalteten Temperierzweig vorgesehen sein. So kann ein für den vorgeschalteten Temperierzweig benötigter, niedrigerer Temperiermediumfluss (im Vergleich zum nachgeschalteten Temperierzweig) erreicht werden, indem ein Teilstrom über den Bypass strömt.

Bevorzugt können seriell geschaltene Temperierzweige vorgesehen sein, wobei das Temperiermedium die Temperierzweige entgegen einer Strömungsrichtung der zu kühlenden Ladeluft oder des zu kühlenden Gemisches durchläuft.

Als Temperiermedium kommt in bekannter Weise bevorzugt eine Flüssigkeit, insbesondere ggf. mit Zusätzen versehenes Wasser, zum Einsatz.

Das in der erfindungsgemäßen Temperiervorrichtung temperierte Temperiermedium kann zusätzlich dazu verwendet werden, die Brennkraftmaschine selbst und/oder einen Schmiermittelkreislauf (z. B. Ölkreislauf) der Brennkraftmaschine zu temperieren.

Der wenigstens eine Zufuhranschluss und/oder der wenigstens eine Abfuhranschluss können bzw. kann in bekannter Weise mit einer Verschlauchung oder einem Rohr verbunden werden. Beispielsweise kann eine Ausbildung als Flansch vorgesehen sein. Andere Ausbildungen aus dem Stand der Technik sind einsetzbar.

Die erfindungsgemäße Brennkraftmaschine ist bevorzugt in Form einer Hubkolbenmaschine ausgebildet.

Die erfindungsgemäße Brennkraftmaschine ist bevorzugt in Form einer stationären Brennkraftmaschine ausgebildet. Bevorzugt ist sie mit einem elektrischen Generator mechanisch zu einem Genset gekoppelt.

Ausführungsbeispiele der Erfindung werden anhand der Figuren diskutiert. Es zeigen:
- Fig. 1: eine perspektivische Ansicht einer erfindungsgemäßen Temperiervorrichtung
- Fig. 2: einen Deckel des Gehäuses der in Fig. 1 dargestellten Tem periervorrichtung
- Fig. 3: eine Explosionsdarstellung zur Fig. 2
- Fig. 4: ein Detail zu einer Variante der Fig. 3 in Explosionsdarstellung
- Fig. 5a, b: schematische Darstellungen von Ausführungsbeispielen einer erfindungsgemäßen Brennkraftmaschine

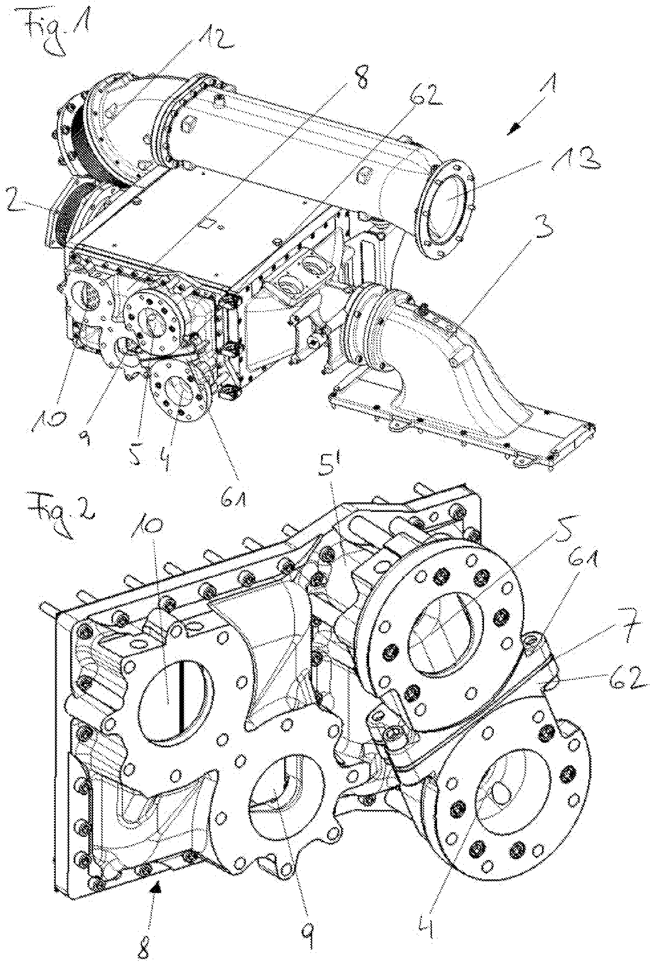

Ein Ausführungsbeispiel einer erfindungsgemäßen Temperiervorrichtung 1 zum Temperieren eines Brennstoff-Luft-Gemisches ist in Fig. 1 gezeigt. Über einen Anschluss 13, eine Rohrverbindung und einen Anschluss 12 (diese Komponenten sind nicht Teil der Temperiervorrichtung 1) wird einer Ansaugseite eines Kompressors eines nicht dargestellten Turboladers ein Brennstoff-Luft-Gemisch zugeführt. Eine Temperiervorrichtung 1 für Ladeluft könnte identisch ausgebildet sein. Vom Turbolader wird das komprimierte Gemisch über eine nicht dargestellte Verschlauchung oder Verrohrung zu einem Eingangsanschluss 2 der Temperiervorrichtung 1 gebracht und verlässt diese über einen Ausgangsanschluss 3.

Die Temperiervorrichtung 1 ist in diesem Ausführungsbeispiel zweistufig ausgebildet und weist einen ersten Temperierzweig 16 und einen zweiten Temperierzweig 17 auf. Vom Abfuhranschluss 5 gelangt das Temperiermedium über eine nicht dargestellte Verschlauchung oder Verrohrung zum Zufuhranschluss 9 des nachgeschalteten Temperierzweigs für Temperiermedium, durchströmt einen Wärmetauscher im Inneren des Gehäuses und verlässt das Gehäuse über den Abfuhranschluss 10. Bei einer einstufigen Ausbildung entfällt der nachgeschaltete Temperierzweig samt Zufuhranschluss 9 und Abfuhranschluss 10.

Ein Gehäuse schließt einen Innenraum ein. Das Gehäuse weist einen Eingangsanschluss 2 und einen Ausgangsanschluss 3 für einen ersten Temperierzweig für das zu temperierende Gemisch und einen Zufuhranschluss 4 und einen Abfuhranschluss 5 für Temperiermedium auf. Der Zufuhranschluss 4 und der Abfuhranschluss 5 sind gemeinsam an einem das Gehäuse mitbildenden Deckel 8 angeordnet (Fig. 2). Sie sind im gezeigten Ausführungsbeispiel jeweils zweiteilig ausgebildet, wobei der dem Deckel 8 nähere Teil 4`, 5' jeweils einstückig mit dem Deckel 8 ausgebildet ist und der vom Deckel 8 entferntere Teil jeweils lösbar mit dem näheren Teil 4`, 5' verbunden ist.

Es ist in diesem Ausführungsbeispiel ein zweiter Temperierkreis vorgesehen, welcher dem ersten Temperierkreis nachgeschaltet ist und einen Zufuhranschluss 9 und einen Abfuhranschluss 10 für Temperiermittel aufweist. In diesem nachgeschalteten Temperierkreis ist in diesem Ausführungsbeispiel kein Bypass 6 vorgesehen.

Im Innenraum des Gehäuses ist in bekannter Weise ein Wärmetauscher angeordnet oder ausgebildet, über welchen im Betrieb der Temperiervorrichtung 1 ein Wärmetausch zwischen Temperiermedium und Ladeluft oder Gemisch stattfindet.

Auf eine Darstellung des Wärmetauschers wurde verzichtet, da er dem Stand der Technik entsprechen kann.

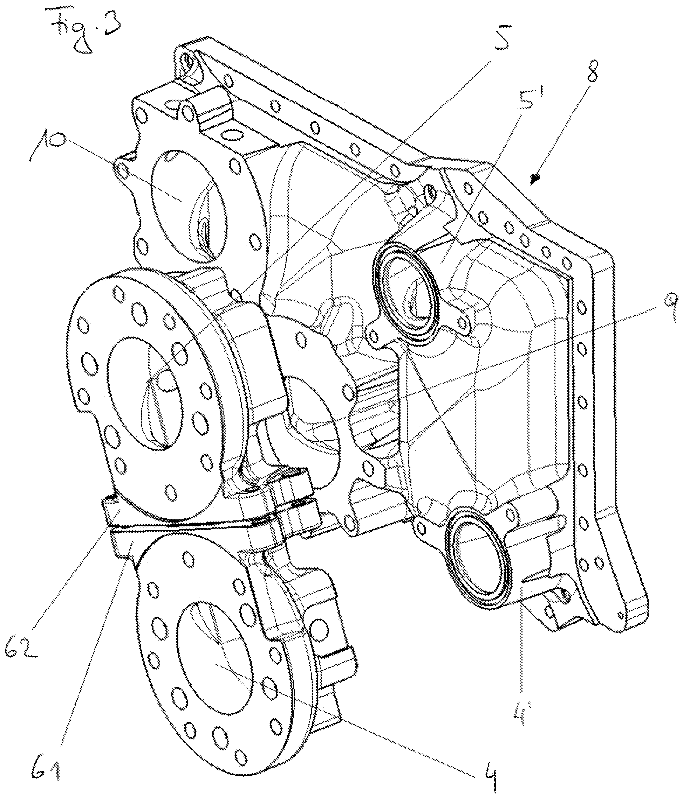

Zwischen dem Zufuhranschluss 4 und dem Abfuhranschluss 5 für Temperiermedium ist ein Bypass 6 angeordnet, über welchen Temperiermedium vom Zufuhranschluss 4 zum Abfuhranschluss 5 strömen kann, ohne in den Wärmetauscher einzutreten. Der Bypass 6 besteht hier beispielhaft aus zwei Teilstücken 61, 62 (vgl. Fig. 3), wobei eines der zwei Teilstücke 61, 62 einstückig mit dem Zufuhranschluss 4 ausgebildet ist (genauer: mit jenem Teil, welches sich weiter weg vom Deckel 8 befindet) und das andere der zwei Teilstücke 61, 62 einstückig mit dem Abfuhranschluss 5 ausgebildet ist (genauer: mit jenem Teil, welches sich weiter weg vom Deckel 8 befindet). Der Bypass 6 ist außerhalb des Innenraums des Gehäuses angeordnet.

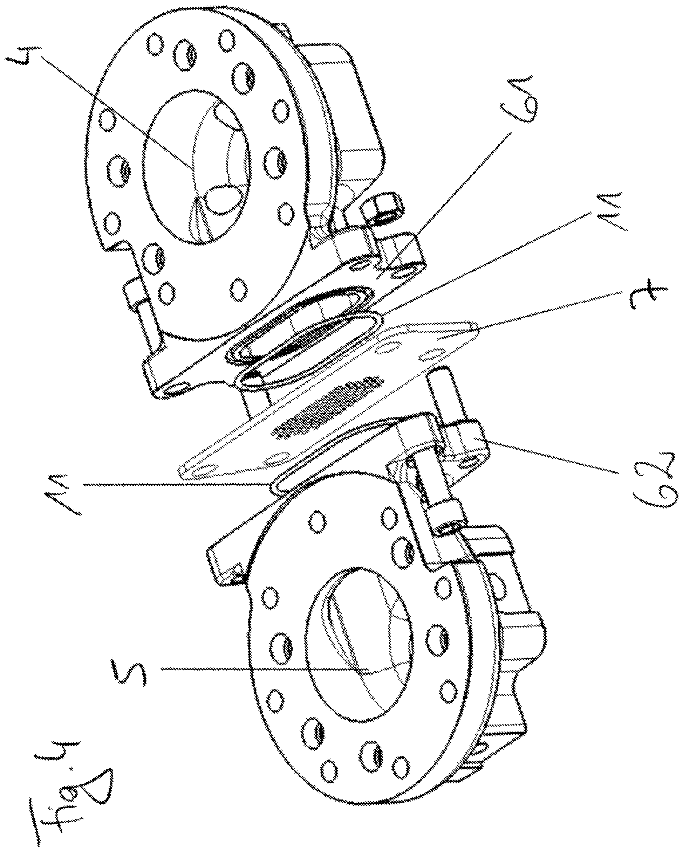

Das Ausführungsbeispiel der Fig. 4 zeigt eine austauschbar im Bypass 6 angeordnete Blende 7, welche hier in Form eines Lochbleches ausgebildet ist. Die Anzahl und/oder Größe der Löcher bestimmen den freien Strömungsquerschnitt der Blende.

Die Blende 7 ist zwischen den zwei Teilstücken 61, 62 angeordnet und gegenüber diesen durch Dichtungen 11 flüssigkeitsdicht abgedichtet. Zum Wechseln der Blende 7 werden die vom Deckel 8 weiter entfernten Teile des Zufuhranschlusses 4 und des Abfuhranschlusses 5 von den dem Deckel 8 näheren Teilen entfernt, die Blende 7 wird samt Dichtungen 11 zwischen den Teilstücken 61, 62 angeordnet und die weiter entfernten Teile des Zufuhranschlusses 4 und des Abfuhranschlusses 5 werden wieder mit den dem Deckel 8 näheren Teilen verbunden.

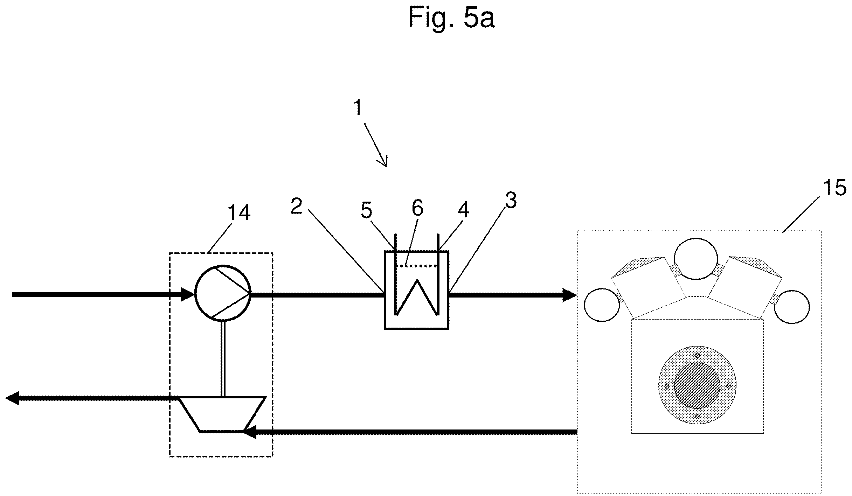

Ein erstes Ausführungsbeispiel einer Brennkraftmaschine in Form einer Hubkolbenmaschine mit einer erfindungsgemäßen Temperiervorrichtung 1 ist schematisch in Fig. 5a gezeigt. Von einem Kompressor eines Turboladers 14 verdichtetes Gemisch oder verdichtete Ladeluft wird der Temperiervorrichtung 1 zugeführt. Das temperierte Gemisch oder die temperierte Ladeluft wird von der Temperiervorrichtung 1 einem Motorblock 15 (mit einer Vielzahl von nicht dargestellten Kolben-Zylinder-Einheiten, in welchen die Verbrennungsprozesse stattfinden) zugeführt.

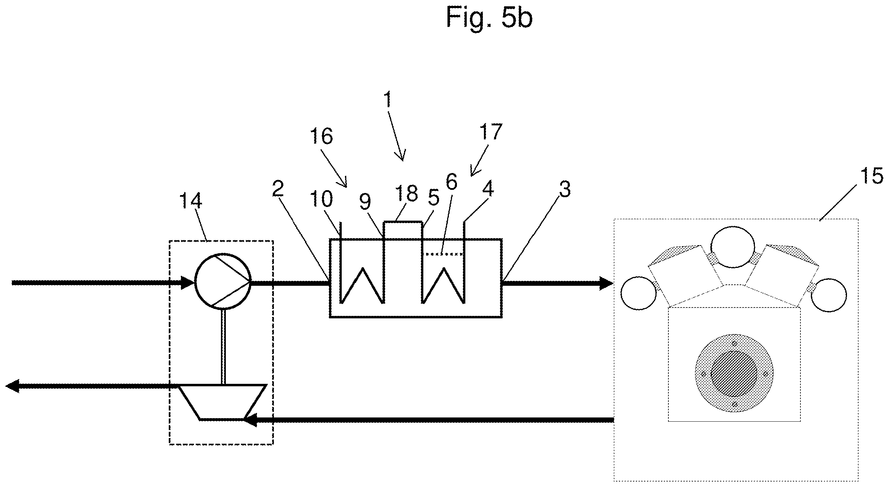

Fig. 5b. zeigt ein weiteres Ausführungsbeispiel einer Brennkraftmaschine in Form einer Hubkolbenmaschine mit einer erfindungsgemäßen Temperiervorrichtung 1. Die Temperiervorrichtung 1 der Fig. 5b weist dabei einen ersten Temperierzweig 16 und einen zweiten Temperierzweig 17 auf. Ein Temperiermedium wird dabei über einen Zufuhranschlusses 4 einer zweiten Temperierzweig 17 zugeführt, welcher über einen Bypass 6 verfügt. Nach durchlaufen des zweiten Temperierzweiges 17 wird das Temperiermedium mittels einer Verbindungsleitung 18 vom Abfuhranschlusses 5 des zweiten Temperierzweiges 17 an einen seriell nachgeschlagenen Zufuhranschluss 9 des ersten Temperierzweiges 16 geleitet. Nach durchlaufen des (seriell nachgeschlagenem) ersten Temperierzweiges 16 verlässt das Temperiermedium die Temperiervorrichtung 1 über den Abfuhranschluss 10.

### Bezugszeichenliste:

- 1: Temperiervorrichtung
- 2: Eingangsanschluss für Ladeluft oder Brennstoff-Luft-Gemisch
- 3: Ausgangsanschluss für Ladeluft oder Brennstoff-Luft-Gemisch
- 4, 4': Zufuhranschluss für Temperiermedium
- 5, 5': Abfuhranschluss für Temperiermedium
- 6: Bypass für Temperiermedium
61 erstes Teilstück des Bypasses
62 zweites Teilstück des Bypasses
- 7: Blende im Bypass
- 8: Deckel des Gehäuses
- 9: Zufuhranschluss eines nachgeschalteten Temperierzweigs für Temperiermedium
- 10: Abfuhranschluss eines nachgeschalteten Temperierzweigs für Temperiermedium
- 11: Dichtung für Blende
- 12: Anschluss für Ansaugseite eines Kompressors eines Turboladers
- 13: Anschluss
- 14: Turbolader
- 15: Motorblock
- 16: erster Temperierzweig
- 17: zweiter Temperierzweig
- 18: Verbindungsleitung

## Patentansprüche

1. Temperiervorrichtung (1) für Ladeluft oder ein Brennstoff-Luft-Gemisch einer Brennkraftmaschine, mit einem einen Innenraum umschließenden Gehäuse, welches zumindest einen Eingangsanschluss (2) und zumindest einen Ausgangsanschluss (3) für die zu temperierende Ladeluft oder das zu temperierende Gemisch und wenigstens einen Zufuhranschluss (4) und wenigstens einen Abfuhranschluss (5) für Temperiermedium aufweist, wobei im Innenraum des Gehäuses ein Wärmetauscher angeordnet oder ausgebildet ist, über welchen im Betrieb der Temperiervorrichtung (1) ein Wärmetausch zwischen Temperiermedium und Ladeluft oder Gemisch stattfindet, **dadurch gekennzeichnet, dass** zwischen dem wenigstens einen Zufuhranschluss (4) und dem wenigstens einen Abfuhranschluss (5) für Temperiermedium zumindest ein Bypass (6) angeordnet ist, über welchen Temperiermedium vom wenigstens einen Zufuhranschluss (4) zum wenigstens einen Abfuhranschluss (5) strömen kann, ohne in den Wärmetauscher einzutreten, wobei
- im zumindest einen Bypass (6) wenigstens eine Blende (7) angeordnet ist,
- die die wenigstens eine Blende (7) in Form eines Lochbleches ist,
- die Anzahl und/oder die Größe der Löcher den freien Strömungsquerschnitt der Blende bestimmen
- der zumindest eine Bypass (6) aus wenigstens zwei Teilstücken (61, 62) besteht,
- eines der wenigstens zwei Teilstücke (61, 62) einstückig mit dem wenigstens einen Zufuhranschluss (4) ausgebildet ist und/oder eines der wenigstens zwei Teilstücke (61, 62) einstückig mit dem wenigstens einen Abfuhranschluss (5) ausgebildet ist sowie
- die wenigstens eine Blende (7) zwischen den wenigstens zwei Teilstücken (61, 62) des Bypasses (6) angeordnet ist.

2. Temperiervorrichtung nach Anspruch 1, wobei der zumindest eine Bypass (6) außerhalb des Innenraums des Gehäuses angeordnet ist.

3. Temperiervorrichtung nach wenigstens einem der vorangehenden Ansprüche, wobei die wenigstens eine Blende (7) austauschbar im zumindest einen Bypass (6) angeordnet ist.

4. Temperiervorrichtung nach wenigstens einem der vorangehenden Ansprüche, wobei die wenigstens eine Blende (7) mit zumindest einer Dichtung (11) zwischen den wenigstens zwei Teilstücken (61, 62) des Bypasses (6) angeordnet ist.

5. Temperiervorrichtung nach wenigstens einem der vorangehenden Ansprüche, wobei zumindest der wenigstens eine Zufuhranschluss (4) und/oder der wenigstens eine Abfuhranschluss (5) und/oder der zumindest eine Bypass (6) gemeinsam an einem das Gehäuse mitbildenden Deckel (8) angeordnet sind.

6. Temperiervorrichtung nach dem vorangehenden Anspruch, wobei zumindest ein Teil des wenigstens einen Zufuhranschlusses (4) und/oder ein Teil des wenigstens einen Abfuhranschlusses (5) einstückig mit dem Deckel (8) ausgebildet sind bzw. ist, wobei bevorzugt vorgesehen ist, dass der Deckel (8) als Gussteil ausgebildet ist.

7. Temperiervorrichtung nach wenigstens einem der vorangehenden Ansprüche, wobei die Temperiervorrichtung (1) zweistufig ausgebildet ist und einen ersten und einen zweiten Temperierzweig aufweist.

8. Brennkraftmaschine, vorzugsweise Hubkolbenmaschine, mit wenigstens einer Temperiervorrichtung (1) nach wenigstens einem der vorangehenden Ansprüche.

## Claims

1. Temperature control device (1) for charge air or a fuel-air mixture of an internal combustion engine, with a housing which encloses an interior space and has at least one inlet connection (2) and at least one outlet connection (3) for the charge air to be temperature-controlled or the mixture to be temperature-controlled and at least one feed connection (4) and at least one discharge connection (5) for temperature control medium, wherein a heat exchanger is arranged or formed in the interior space of the housing, via which a heat exchange takes place between the temperature control medium and the charge air or mixture during operation of the temperature control device (1), **characterized in that** at least one bypass (6), via which temperature control medium can flow from the at least one feed connection (4) to the at least one discharge connection (5) without entering the heat exchanger, is arranged between the at least one feed connection (4) and the at least one discharge connection (5) for temperature control medium, wherein
- at least one panel (7) is arranged in the at least one bypass (6),
- the at least one panel (7) is in the form of a perforated metal sheet,
- the number and/or the size of the holes determine the free flow cross section of the panel,
- the at least one bypass (6) consists of at least two segments (61, 62),
- one of the at least two segments (61, 62) is formed in one piece with the at least one feed connection (4) and/or one of the at least two segments (61, 62) is formed in one piece with the at least one discharge connection (5), and
- the at least one panel (7) is arranged between the at least two segments (61, 62) of the bypass (6).

2. Temperature control device according to claim 1, wherein the at least one bypass (6) is arranged outside the interior space of the housing.

3. Temperature control device according to at least one of the preceding claims, wherein the at least one panel (7) is arranged so as to be replaceable in the at least one bypass (6) .

4. Temperature control device according to at least one of the preceding claims, wherein the at least one panel (7) is arranged with at least one seal (11) between the at least two segments (61, 62) of the bypass (6).

5. Temperature control device according to at least one of the preceding claims, wherein at least the at least one feed connection (4) and/or the at least one discharge connection (5) and/or the at least one bypass (6) are arranged together on a cover (8) also forming the housing.

6. Temperature control device according to the preceding claim, wherein at least a part of the at least one feed connection (4) and/or a part of the at least one discharge connection (5) are or is formed in one piece with the cover (8), wherein it is preferably provided that the cover (8) is formed as a cast part.

7. Temperature control device according to at least one of the preceding claims, wherein the temperature control device (1) is formed two-stage and has a first and a second temperature control branch.

8. Internal combustion engine, preferably reciprocating engine, with at least one temperature control device (1) according to at least one of the preceding claims.

## Revendications

1. Dispositif de régulation thermique (1) pour de l'air de charge ou un mélange d'air-de combustible d'un moteur à combustion interne, avec un boîtier renfermant un espace intérieur, lequel présente au moins un raccord d'entrée (2) et au moins un raccord de sortie (3) pour l'air de charge à thermoréguler ou le mélange à thermoréguler et au moins un raccord d'amenée (4) et au moins un raccord d'évacuation (5) pour un agent de régulation thermique, dans lequel est disposé ou réalisé dans l'espace intérieur du boîtier un échangeur de chaleur, par l'intermédiaire duquel un échange de chaleur entre l'agent de régulation thermique et l'air de charge ou le mélange a lieu lors du fonctionnement du dispositif de régulation thermique (1), **caractérisé en ce qu'**est disposée entre l'au moins un raccord d'amenée (4) et l'au moins un raccord d'évacuation (5) pour l'agent de régulation thermique au moins une dérivation (6), par l'intermédiaire de laquelle un agent de régulation thermique peut circuler depuis l'au moins un raccord d'amenée (4) à l'au moins un raccord d'évacuation (5) sans entrer dans l'échangeur de chaleur, dans lequel
- au moins un diaphragme (7) est disposé dans l'au moins une dérivation (6),
- l'au moins un diaphragme (7) présente la forme d'une tôle perforée,
- le nombre et/ou la taille des trous définissent la section transversale d'écoulement libre du diaphragme,
- l'au moins une dérivation (6) est constituée d'au moins deux pièces partielles (61, 62),
- une des au moins deux pièces partielles (61, 62) est réalisée d'un seul tenant avec l'au moins un raccord d'amenée (4) et/ou au moins une des au moins deux pièces partielles (61, 62) est réalisée d'un seul tenant avec l'au moins un raccord d'évacuation (5), ainsi que
- l'au moins un diaphragme (7) est disposé entre les au moins deux pièces partielles (61, 62) de la dérivation (6) .

2. Dispositif de régulation thermique selon la revendication 1, dans lequel l'au moins une dérivation (6) est disposée à l'extérieur de l'espace intérieur du boîtier.

3. Dispositif de régulation thermique selon au moins l'une quelconque des revendications précédentes, dans lequel l'au moins un diaphragme (7) est disposé de manière interchangeable dans l'au moins une dérivation (6).

4. Dispositif de régulation thermique selon au moins l'une quelconque des revendications précédentes, dans lequel l'au moins un diaphragme (7) est disposé avec au moins un joint d'étanchéité (11) entre les au moins deux pièces partielles (61, 62) de la dérivation (6).

5. Dispositif de régulation thermique selon au moins l'une quelconque des revendications précédentes, dans lequel au moins l'au moins un raccord d'amenée (4) et/ou l'au moins un raccord d'évacuation (5) et/ou l'au moins une dérivation (6) sont disposés conjointement sur un couvercle (8) formant conjointement le boîtier.

6. Dispositif de régulation thermique selon la revendication précédente, dans lequel au moins une partie de l'au moins un raccord d'amenée (4) et/ou une partie de l'au moins un raccord d'évacuation (5) sont réalisées d'un seul tenant avec le couvercle (8), dans lequel il est prévu de manière préférée que le couvercle (8) est réalisé en tant qu'une partie coulée.

7. Dispositif de régulation thermique selon au moins l'une quelconque des revendications précédentes, dans lequel le dispositif de régulation thermique (1) est réalisé avec deux niveaux et présente une première et une deuxième branche de régulation thermique.

8. Moteur à combustion interne, en particulier moteur à pistons alternatifs, avec au moins un dispositif de régulation thermique (1) selon au moins l'une quelconque des revendications précédentes.
